# EUROPEAN PATENT APPLICATION

(11) **EP 4 772 335 A1**
(43) Date of publication of application: **08.07.2026**
(21) Application number: 24871795.1
(22) Date of filing: 06.09.2024
(51) Int. Cl.: B29C 73/02

(54) **PUNCTURE REPAIR KIT, MIXING DEVICE, PUNCTURE REPAIR METHOD, AND MIXING METHOD**

(30) Priority: 25.09.2023 WO PCT/JP2023/034753
(71) Applicant: SUMITOMO RUBBER INDUSTRIES, LTD., Kobe-shi, Hyogo 651-0072 (JP)
(72) Inventor: MAKI, Takashi, Kobe-shi, Hyogo 651-0072 (JP); NOMURA, Keisuke, Kobe-shi, Hyogo 651-0072 (JP); TAKAGI, Keiji, Kobe-shi, Hyogo 651-0072 (JP)
(74) Representative: Forresters IP LLP
(86) International application number: PCT/JP2024/032089
(87) International publication number: WO 2025/069997

(57) **Abstract**

The present invention is a puncture repair kit (1) for repairing a puncture of an object. The puncture repair kit (1) includes a container (5) containing a puncture repair liquid (R), a compressed air source (3) for supplying compressed air (A), a mixing device (4) attached to the container (5) and for generating a mixture of the puncture repair liquid (R) and the compressed air (A), a first connector (12) connecting the compressed air source (3) and the mixing device (4), and a second connector (13) connecting the mixing device (4) and a valve of the punctured object. A radiation angle θ of the mixture that is non-aerosolized and non-foamed and discharged from the valve into an interior of the object is 20 degrees or more.

## Description

### FIELD OF THE INVENTION

The present invention relates to a puncture repair kit for repairing a puncture of an object, a mixing device for mixing a puncture repair liquid and compressed air (A) puncture repair method for repairing a puncture of an object, and a mixing method for mixing a puncture repair liquid and compressed air.

### BACKGROUND ART

Conventionally, puncture repair kits for repairing objects such as punctured tires have been known. For example, Patent Document 1 below proposes a puncture repair kit for repairing a puncture by sequentially injecting a puncture repair liquid and compressed air into a punctured object by using compressed air from a compressor.

### Prior Art Document

### Patent Literature

Patent Document 1: Japanese Patent Application Publication No. 2017-056662

### SUMMARY OF THE INVENTION

### Problems to be Solved by the Invention

However, in the puncture repair kit of Patent Document 1, the puncture repair liquid to which pressure is applied by the compressed air is discharged linearly into the interior of the punctured object, therefore, the puncture repair liquid might stagnate in a portion of the interior of the object. It may sometimes be difficult for such a puncture repair liquid to reach the punctured portion if the inner surface of the object has an uneven structure, and thus there has been a demand for further improvement.

The present invention was made in view of the above, and a primary object thereof is to provide a puncture repair kit, a mixing device, a puncture repair method, and a mixing method capable of efficiently repairing a puncture even when the inner surface of an object has an uneven structure.

### Means for Solving the Problem

The present invention is a puncture repair kit for repairing a puncture of an object, including:
a container containing a puncture repair liquid;
a compressed air source for supplying compressed air;
a mixing device attached to the container for generating a mixture of the puncture repair liquid and the compressed air;
a first connector connecting the compressed air source and the mixing device; and
a second connector connecting the mixing device and a valve of the punctured object, wherein
a radiation angle of the mixture that is non-aerosolized and non-foamed and discharged from the valve into an internal space of the object is 20 degrees or more.

### Advantageous Effects of the Invention

By having the above-described configuration, it is possible that the puncture repair kit of the present invention efficiently repairs a puncture even when the inner surface of an object has an uneven structure.

### BRIEF DESCRIPTION OF THE DRAWINGS

[FIG. 1] a perspective view conceptually showing a puncture repair kit according to an embodiment of the present invention.
[FIG. 2] a cross-sectional view showing an example of a bottle unit.
[FIG. 3] a cross-sectional view taken along line A-A of FIG. 1.
[FIG. 4] a flowchart of a puncture repair method.
[FIG. 5] a schematic diagram conceptually showing a method for measuring a radiation angle of a mixture.

### DETAILED DESCRIPTION OF THE INVENTION

An embodiment of the present invention will now be described in conjunction with accompanying drawings.

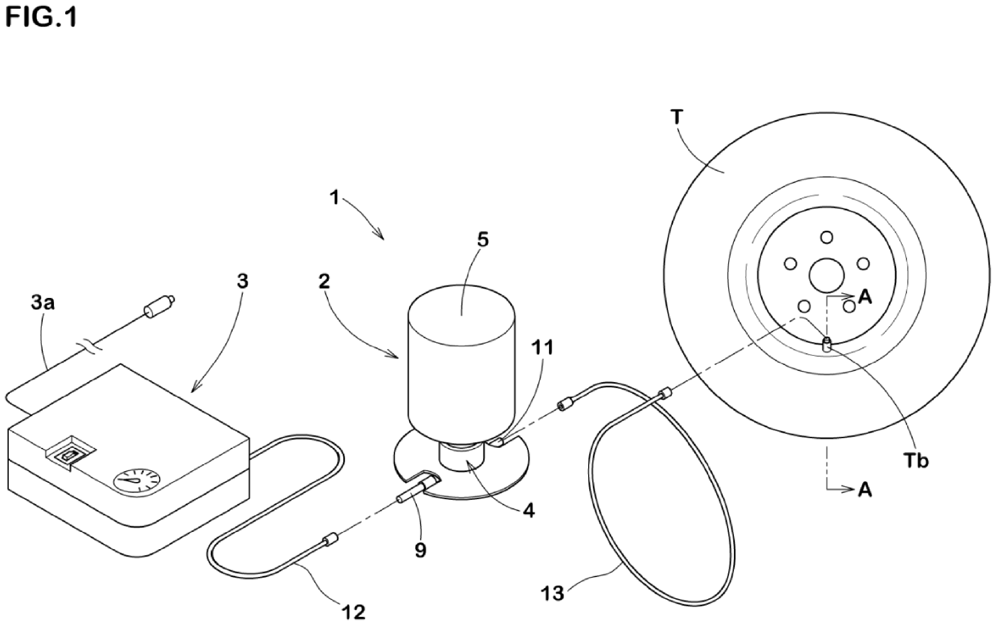

FIG. 1 is a perspective view conceptually showing a puncture repair kit 1 of the present embodiment. As shown in FIG. 1, the puncture repair kit 1 is suitably used for injecting a puncture repair liquid (R) and compressed air (A) into an object (T) such as a punctured tire, for example.

The puncture repair kit 1 of the present embodiment includes a bottle unit 2 for supplying a mixture of the puncture repair liquid (R) and the compressed air (A), and a compressed air source 3 for supplying the compressed air (A). The compressed air source 3 is a compressor, for example. The compressed air source 3 generates the compressed air (A) by being supplied with electricity through a cord (3a) connected to an external power source, for example. The compressed air source 3 configured as such can supply a large amount of the compressed air (A) in a small size and is excellent in storability when not in use.

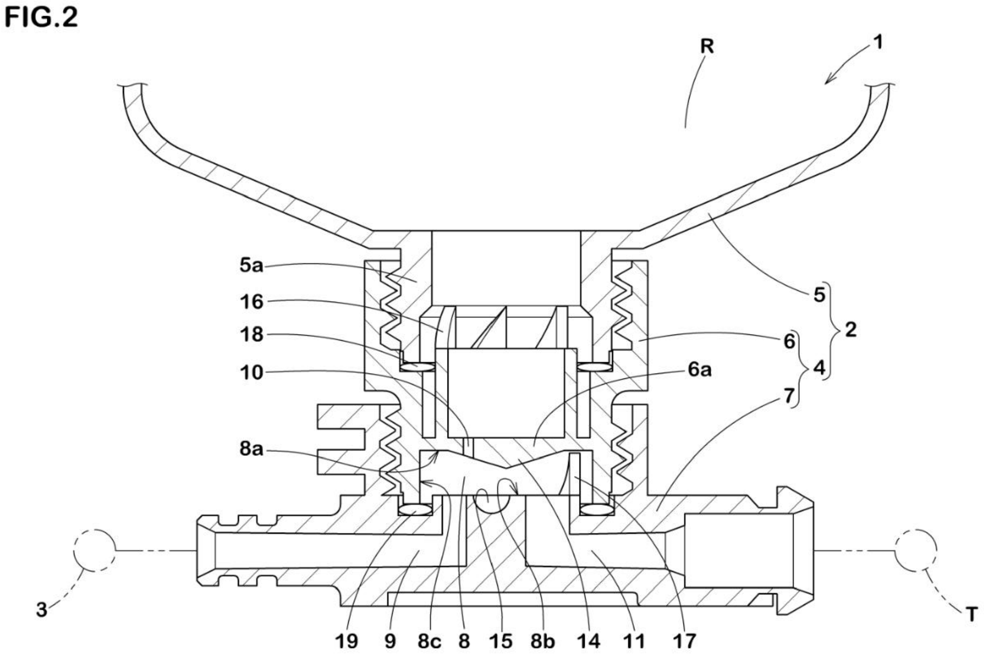

FIG. 2 is a cross-sectional view showing an example of the bottle unit 2. As shown in FIG. 2, the bottle unit 2 of the present embodiment includes a mixing device 4 for mixing the puncture repair liquid (R) and the compressed air (A), and a container 5 in which the puncture repair liquid (R) is contained. The mixing device 4 includes an adapter member 6 attached to the container 5 and a cap member 7 attached to the adapter member 6, for example.

The bottle unit 2 configured as such facilitates the attachment of the mixing device 4 and the container 5, which helps shorten the time required for puncture repair. Further, the mixing device 4 can premix the puncture repair liquid (R) and the compressed air (A) before injected into the object (T), thereby, it is possible that the time required for puncture repair is shortened. It should be noted that the mixing device 4 is not limited to such a form and may be an integrally molded product in which the adapter member 6 and the cap member 7 are integrated, for example.

The container 5 has a mouth portion (5a) for containing the puncture repair liquid (R) inside the container 5, for example. The container 5 contains the puncture repair liquid (R) through the mouth portion (5a), for example. The mouth portion (5a) has a film (not shown) for airtightly retaining the contained puncture repair liquid (R), for example. It is preferred that the mixing device 4 is attached to the mouth portion (5a) of the container 5. The container 5 configured as such does not require a formation of a separate take-out port for the puncture repair liquid (R), which helps reduce manufacturing costs.

The mixing device 4 in the present embodiment includes a mixing chamber 8 having a space for mixing the puncture repair liquid (R) and the compressed air (A). The mixing chamber 8 includes, for example, a top surface (8a) located upward, a floor surface (8b) located downward, and a side surface (8c) connecting the top surface (8a) and the floor surface (8b) when the mixing device 4 is attached to the container 5 for puncture repair. The mixing chamber 8 has a cylindrical space where the top surface (8a) and the floor surface (8b) are circular, for example.

The mixing device 4 in the present embodiment includes a first inlet 9 for supplying the compressed air (A) to the mixing chamber 8 and a second inlet 10 for supplying the puncture repair liquid (R) to the mixing chamber 8. The first inlet 9 communicates with a compressor which is the compressed air source 3, for example. It is preferred that the second inlet 10 directly communicates with the container 5. In the mixing device 4 configured as such, the mixing chamber 8 is repeatedly switched between a positive pressure state and a negative pressure state due to the pulsation of the compressed air (A) supplied from the compressor (compressed air source 3), whereby the puncture repair liquid (R) in the container 5 is dripped into the mixing chamber 8 from the second inlet 10 to generate the mixture.

It is preferred that the mixture of the puncture repair liquid (R) and the compressed air (A) is generated without being aerosolized and without being foamed. Such a mixture is supplied into the object (T) as a non-aerosolized mixture in which the puncture repair liquid (R) has a particle size (particle diameter) greater than 100 µm, therefore, it is possible that the floating of the puncture repair liquid (R) particles in the object (T) is suppressed. Further, since the puncture repair liquid (R) is not foamed, this mixture has excellent fluidity in the object (T) and helps quickly move (deliver) the puncture repair liquid (R) to the punctured portion by a pre-rotation step S4 described later. Here, the particle size of the puncture repair liquid (R) contained in the mixture is determined as a diameter thereof if the particle shape is spherical, and as a maximum length thereof if the particle shape is other than spherical.

In the non-aerosolized mixture, it is preferred that the particle size of the puncture repair liquid (R) is larger than 500 µm. Since the particle size of the puncture repair liquid (R) in the mixture is greater than 500 µm, the floating of the puncture repair liquid (R) within the object (T) can be more reliably suppressed, thereby, it is possible that the mixture is efficiently supplied into the object (T). Therefore, the puncture repair kit 1 of the present embodiment can efficiently supply the mixture of the puncture repair liquid (R) and the compressed air (A).

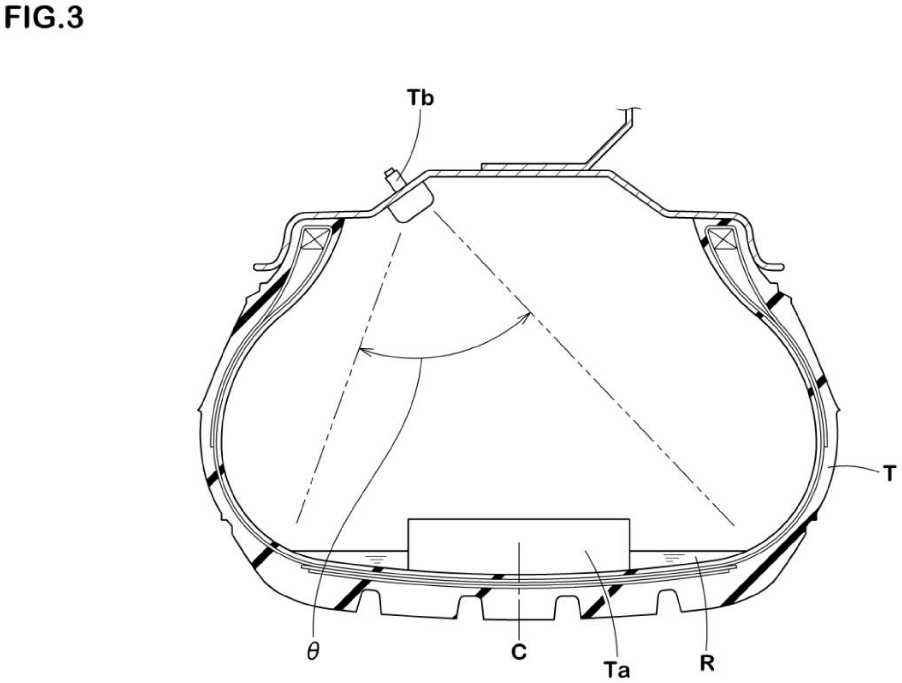

A portion of the mixture may be an aerosol of the puncture repair liquid (R) and the compressed air (A), for example. The mixing chamber 8 may aerosolize a portion of the mixture, for example. It is preferred that the aerosolized mixture is less than 10% of the total mixture. In this case, the mixture can supply a portion of the puncture repair liquid (R) as aerosol particles having a particle size of about 1 to 100 µm in a state of floating in the object (T). Therefore, even when a sound-absorbing material (Ta) (shown in FIG. 3), a sensor, and the like are disposed inside the object (T), and thus the inner surface has an uneven structure, it is possible that the puncture repair kit 1 of the present embodiment partially repairs the punctured portion with the floating mixture.

It is preferred that the mixing device 4 includes an outlet 11 for discharging the mixture of the puncture repair liquid (R) and the compressed air (A) from the mixing chamber 8. The mixing device 4 configured as such can smoothly perform the inflow and outflow of the puncture repair liquid (R) and the compressed air (A), which helps to shorten the time required for puncture repair.

The first inlet 9 and the outlet 11 are provided in the cap member 7, for example. The first inlet 9 and the outlet 11 in the present embodiment are provided in the floor surface (8b). The second inlet 10 is provided in a partition wall (6a) of the adapter member 6, for example. The second inlet 10 of the present embodiment is provided in the top surface (8a).

Since the mixing device 4 configured as such generates the mixture of the compressed air (A) and the puncture repair liquid (R) which is dripped from the second inlet 10 located on the upper side and discharges the mixture from the outlet 11 located on the lower side, the stagnation of the dripped puncture repair liquid (R) is suppressed, therefore, it is possible that the mixture is efficiently generated.

In the mixture discharged from the outlet 11, a volume V1 of the compressed air (A) is preferably in the range from 14 to 700 times a volume V2 of the puncture repair liquid (R). A volume ratio V1/V2 between the compressed air (A) and the puncture repair liquid (R) can be adjusted by changing, for example, an opening area ratio between the first inlet 9 and the second inlet 10, a pressure of the compressed air (A), a viscosity of the puncture repair liquid (R), and the like.

Here, the volume V1 of the compressed air (A) is determined based on the amount of air discharged per unit time from the compressed air source 3 in a no-load state. Further, the volume V2 of the puncture repair liquid (R) is determined based on the weight of the puncture repair liquid (R) supplied per unit time and the specific gravity of the puncture repair liquid (R).

Since the volume ratio V1/V2 between the compressed air (A) and the puncture repair liquid (R) is 14 times or more, the mixture can be discharged at a wide angle inside the object (T), and even if the object (T) has an uneven structure thereinside, it is possible that the non-aerosolized mixture is discharged over a wide range around the uneven structure.

Since the volume ratio V1/V2 between the compressed air (A) and the puncture repair liquid (R) is 700 times or less, insufficient supply of the puncture repair liquid (R) is suppressed, which enables efficient puncture repair. Further, the mixing device 4 configured as such can supply a larger amount of the puncture repair liquid (R) in a shorter time compared to a case where the puncture repair liquid (R) is aerosolized for supply. Therefore, the mixing device 4 of the present embodiment can generate the mixture for efficiently repairing a puncture even when the object (T) has an uneven structure on the inner surface thereof.

FIG. 3 is a cross-sectional view taken along line A-A of FIG. 1. As shown in FIG. 3, as a more preferred embodiment, the object (T) such as a punctured tire has the sound-absorbing material (Ta) disposed thereinside and an uneven structure on the inner surface thereof, for example. The puncture repair kit 1 of the present embodiment is suitably used for puncture repair of the object (T) such as a tire having an uneven structure on an inner surface thereof.

As shown in FIG. 1, the puncture repair kit 1 of the present embodiment includes a first connector 12 configured to connect the compressed air source 3 and the first inlet 9 of the mixing device 4, and a second connector 13 configured to connect the outlet 11 of the mixing device 4 and a valve (Tb) of the punctured object (T). The puncture repair kit 1 configured as such is easy to connect and can shorten the time required for preparation for puncture repair.

Note that, although not shown, in the puncture repair kit 1, the compressed air source 3 and the mixing device 4 may be formed integrally as one piece, for example. In this case, the first connector 12 is, for example, a connection pipe connecting the compressed air source 3 and the mixing device 4. The puncture repair kit 1 configured as such can omit the time for connecting the first connector 12, and thus can further shorten the time required for preparation for puncture repair.

It is preferred that the puncture repair liquid (R) contains at least a rubber solid content and water. Examples of the rubber solid content include natural rubber. With the puncture repair liquid (R) configured as such, the rubber solid content can be efficiently moved (delivered) to the punctured portion inside the object (T) such as a punctured tire by the pre-rotation step S4 described later, thereby shortening the time required for puncture repair.

The puncture repair liquid (R) may contain glycol, for example. Examples of the glycol include ethylene glycol, 1,3-propanediol, propylene glycol, and the like. The puncture repair liquid (R) configured as such is suitable for efficiently repairing a punctured portion when injected into the object (T) such as a punctured tire.

As shown in FIG. 3, it is preferred that a radiation angle θ at which the mixture of the puncture repair liquid (R) and the compressed air (A) is discharged from the valve (Tb) of the object (T) such as a punctured tire into the interior of the object (T) is 20 degrees or more. Here, the radiation angle θ is the maximum radiation angle of the non-aerosolized mixture discharged from the valve (Tb) into the object (T) and is determined based on the spread of the puncture repair liquid (R) in the mixture.

By having the radiation angle θ of 20 degrees or more, even if the inner surface of the object (T) has an uneven structure, the puncture repair liquid (R) can be discharged around the uneven structure, therefore, the puncture repair liquid (R) can be efficiently moved (delivered) to the punctured portion by the pre-rotation step S4 described later. Thereby, it is possible that the puncture repair kit 1 of the present embodiment efficiently repairs a puncture even when the inner surface of the object (T) has an uneven structure.

The radiation angle θ at which the mixture of the puncture repair liquid (R) and the compressed air (A) is discharged from the valve (Tb) of the object (T) such as a punctured tire into the interior of the object (T) is preferably 75 degrees or less. When the punctured object (T) is a general tire, since the radiation angle θ is 75 degrees or less, the puncture repair liquid (R) is suppressed from spreading to the inside of the sidewall portions, therefore, it is possible that the puncture repair liquid (R) is efficiently discharged.

As shown in FIG. 2, the mixing chamber 8 may include a protruding portion 14 protruding from the top surface (8a) toward the interior of the mixing chamber 8, for example. As the protruding portion 14, a conical shape having the most protruding apex is suitably adopted, for example. The protruding portion 14 configured as such can give directionality to the flow inside the mixing chamber 8 and thus can efficiently discharge the mixture of the puncture repair liquid (R) and the compressed air (A).

The mixing chamber 8 may have a plurality of hemispherical recesses 15 formed on at least one of the top surface (8a), the floor surface (8b), and the side surface (8c), for example. Such a plurality of recesses 15 help smooth the flow and shorten the residence time of the mixture in the mixing chamber 8.

The adapter member 6 has a breaking portion 16 that breaks the film (not shown) of the mouth portion (5a) when the adapter member 6 is attached to the mouth portion (5a) of the container 5, for example. The breaking portion 16 configured as such can break the film of the mouth portion (5a) when the mixing device 4 is attached to the container 5, which allows the puncture repair liquid (R) to be supplied to the mixing chamber 8.

The cap member 7 may be directly attached to the mouth portion (5a) of the container 5 in an extremely low-temperature environment where it is difficult to generate a mixture in the mixing device 4, for example. In this case, it is preferred that the cap member 7 has a secondary breaking portion 17 that breaks the film of the mouth portion (5a) when the cap member 7 is attached to the mouth portion (5a). The secondary breaking portion 17 is provided near the opening of the outlet 11, for example.

It is possible that the secondary breaking portion 17 configured as such breaks the film of the mouth portion (5a) when the cap member 7 is directly attached to the container 5. Further, this secondary breaking portion 17 helps reduce flow resistance in the mixing chamber 8 when the cap member 7 is attached to the adapter member 6 as the mixing device 4.

The adapter member 6 is screwed into both the mouth portion (5a) of the container 5 and the cap member 7, for example. It is preferred that the space between the adapter member 6 and the mouth portion (5a) is sealed by a seal member 18. The space between the adapter member 6 and the cap member 7 is sealed by a secondary seal member 19, for example. The adapter member 6 configured as such is easy to attach to the container 5 and the cap member 7 and has excellent airtightness after attachment.

Next, a puncture repair method by using the puncture repair kit 1 of the present embodiment will be described with reference to FIGS. 1 to 3.

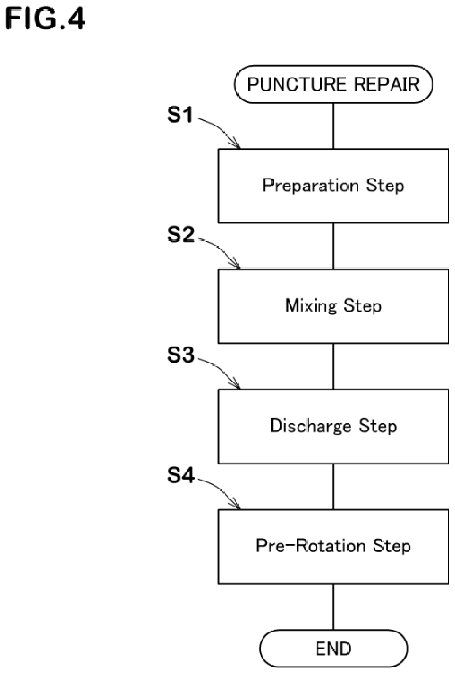

FIG. 4 is a flowchart of the puncture repair method of the present embodiment. As shown in FIG. 4, the puncture repair method of the present embodiment includes a preparation step S1 for preparing a punctured object (T) and the puncture repair kit 1. In the preparation step S1, the compressed air source 3 and the first inlet 9 are connected by the first connector 12, for example. Further, in the preparation step S1, it is preferred that the outlet 11 and the valve (Tb) of the punctured object (T) are connected by the second connector 13.

In the preparation step S1, the mixing device 4 and the mouth portion (5a) of the container 5 are attached, and the container 5 is arranged such that the mouth portion (5a) faces downward, for example. In the preparation step S1, it is preferred that the cord (3a) of the compressed air source 3 is connected to an external power source. In this preparation step S1, the connection parts are easy to understand, and even an inexperienced user can complete the preparation in a short time.

The puncture repair method of the present embodiment includes a mixing step S2 for mixing the compressed air (A) supplied through the first inlet 9 and the puncture repair liquid (R) supplied through the second inlet 10 in the mixing chamber 8. In the mixing step S2, the compressed air (A) is supplied to the mixing chamber 8 by turning on the power of the compressed air source 3, for example. In the mixing step S2, it is preferred that the mixture of the puncture repair liquid (R) and the compressed air (A) is generated by dripping the puncture repair liquid (R) into the mixing chamber 8 through the second inlet 10. The dripping of the puncture repair liquid (R) is caused by repetition of switch between a positive pressure state and a negative pressure state in the mixing chamber 8 due to the pulsation of the compressed air (A) supplied from the compressed air source 3.

In the mixing step S2, it is preferred to mix such that the volume V1 of the compressed air (A) is in the range from 14 to 700 times the volume V2 of the puncture repair liquid (R). The mixing step S2 configured as such can generate a mixture suitable for efficiently discharging the puncture repair liquid (R) inside the object (T), which helps shorten the time required for puncture repair.

The mixing method for mixing the puncture repair liquid (R) and the compressed air (A) of the present embodiment includes this mixing step S2. For this reason, the mixing method for mixing the puncture repair liquid (R) and the compressed air (A) of the present embodiment can generate a mixture suitable for efficiently discharging the puncture repair liquid (R) inside the object (T), which helps shorten the time required for puncture repair.

The puncture repair method of the present embodiment includes a discharge step S3 of discharging the mixture generated in the mixing step S2 into the interior of the object (T) such as a punctured tire. In the discharge step S3, it is preferred that the non-aerosolized mixture is discharged from the valve (Tb) of the object (T) into the interior of the object (T) such that the radiation angle θ is 20 degrees or more. In the discharge step S3, it is preferred to discharge such that the radiation angle θ is 75 degrees or less. The discharge step S3 configured as such enables efficient puncture repair even when the inner surface of the object (T) has an uneven structure.

It is preferred that the puncture repair method includes the pre-rotation step S4 for moving the puncture repair liquid (R) discharged into the object (T) to the punctured portion. Such a pre-rotation step S4 can quickly move the puncture repair liquid (R) to the punctured portion, which helps to efficiently repair the puncture.

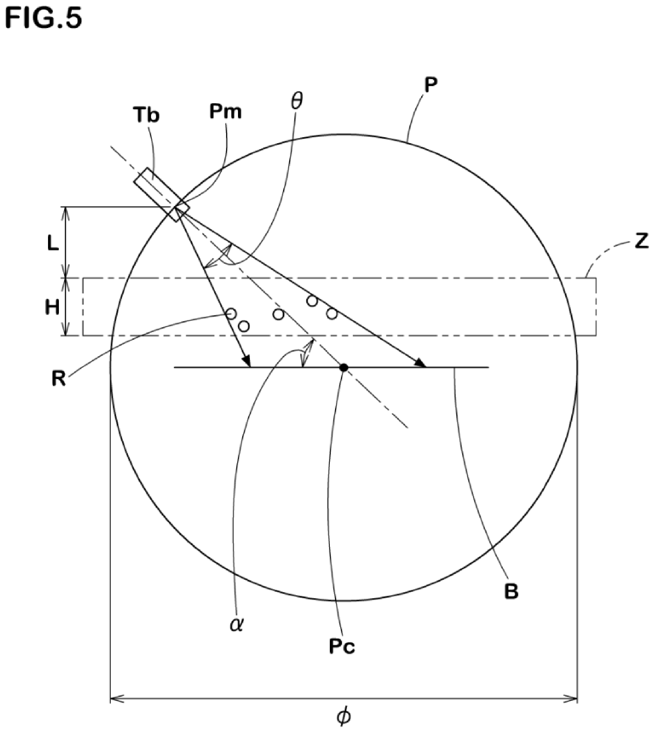

FIG. 5 is a schematic diagram conceptually showing a method for measuring the radiation angle θ of the mixture. As shown in FIG. 5, the radiation angle θ of the mixture is measured by imaging particles of the puncture repair liquid (R) discharged from the valve (Tb) attached to a cylindrical transparent acrylic pressure vessel (P) having an inner diameter φ of 230 mm, for example.

An example of a specific method for measuring the radiation angle θ of the mixture is shown below.

In the example of FIG. 5, the pressure vessel (P) is provided with a reference surface (B) corresponding to the inner cavity surface of a tire at a position passing through a center axis (Pc) thereof. The valve (Tb) is attached to an attachment position (Pm) on a cylindrical wall surface of the pressure vessel (P) above the reference surface (B) at an angle α of 45 degrees with respect to the reference surface (B) and in a direction orthogonal to the center axis (Pc), for example. The pressure vessel (P) configured as such is suitable for reproducing the internal state of the object (T) during puncture repair.

It is preferred that the pressure vessel (P) has an internal volume equal to an internal volume of the object (T). The method for measuring the radiation angle θ configured as such can accurately reproduce the pressure rise during puncture repair of the object (T).

It is preferred that the radiation angle θ of the mixture is measured by taking images from the direction of the center axis (Pc) of the pressure vessel (P). As for the measurement method of the radiation angle θ of the mixture, when 400 ml of puncture repair liquid (R) is contained in the container 5, the discharge state is imaged at a pitch of 0.5 seconds for 15 seconds from 5 to 20 seconds after the start of discharge, for example. The measurement method of the radiation angle θ of the mixture measures the radiation angle θ by overlaying these multiple images (e.g., 31 images). Such imaging can exclude the puncture repair liquid (R) dripping downward from the valve (Tb) immediately after the start of discharge or in the latter half of discharge, which can allow accurate measurement of the radiation angle θ.

It should be noted that the measurement time is not limited to 5 to 20 seconds from the start of discharge and any time may be adopted as long as it is possible to measure a stable state of discharge by excluding the puncture repair liquid (R) that drips downward from the valve (Tb) immediately after the start of discharge or in the latter half of discharge. If the capacity of the container 5 is small, since the discharge time becomes shorter, a shorter measurement time than the above-mentioned 15 seconds may be adopted for example.

It is preferred that the radiation angle θ of the mixture is measured based on the particles of the puncture repair liquid (R) located in a measurement zone (Z), which is a part of the captured image. The measurement zone (Z) is defined as a rectangle with a height (H) of 40 mm, for example. In the present embodiment, a distance (L) from the measurement zone (Z) to the attachment position (Pm) is also 40 mm. The measurement method configured as such can exclude the aerosolized mixture and the puncture repair liquid (R) that bounces off the reference surface (B), which allows accurate measurement of the radiation angle θ.

While detailed description has been made of the present invention according to an especially preferred embodiment, the present invention can be embodied in various forms without being limited to the illustrated embodiment.

### [Statement of Invention ]

The present invention includes the following aspects.

### [Present Invention 1 ]

A puncture repair kit for repairing a puncture of an object, including:
a container containing a puncture repair liquid;
a compressed air source for supplying compressed air;
a mixing device attached to the container for generating a mixture of the puncture repair liquid and the compressed air;
a first connector connecting the compressed air source and the mixing device; and
a second connector connecting the mixing device and a valve of the punctured object, wherein
a radiation angle of the mixture that is non-aerosolized and non-foamed and discharged from the valve into an internal space of the object is 20 degrees or more.

### [Present Invention 2]

The puncture repair kit according to Present Invention 1, wherein the radiation angle is 75 degrees or less.

### [Present Invention 3]

The puncture repair kit according to Present Invention 1, wherein the puncture repair liquid contains at least a rubber solid content and water.

### [Present Invention 4]

The puncture repair kit according to Present Invention 1, wherein the puncture repair liquid has a particle size larger than 100 µm in the mixture that is non-aerosolized.

### [Present Invention 5]

The puncture repair kit according to Present Invention 4, wherein the particle size of the puncture repair liquid is larger than 500 µm.

### [Present Invention 6]

The puncture repair kit according to Present Invention 1, wherein
the container has a mouth portion for containing the puncture repair liquid inside the container, and
the mixing device is attached to the mouth portion.

### [Present Invention 7]

The puncture repair kit according to Present Invention 1, wherein the compressed air source is a compressor.

### [Present Invention 8]

The puncture repair kit according to any one of Present Inventions 1 to 7, wherein
the mixing device includes:
a mixing chamber having a space for mixing the puncture repair liquid and the compressed air;
a first inlet connected to the first connector;
a second inlet communicating with the container; and
an outlet connected to the second connector, wherein
a volume of the compressed air is in a range from 14 to 700 times a volume of the puncture repair liquid in the mixture discharged from the outlet.

### [Present Invention 9]

A mixing device for mixing a puncture repair liquid and compressed air, including:
a mixing chamber having a space for mixing the puncture repair liquid and the compressed air;
a first inlet for supplying the compressed air to the mixing chamber;
a second inlet for supplying the puncture repair liquid to the mixing chamber; and
an outlet for discharging a mixture of the puncture repair liquid and the compressed air from the mixing chamber, wherein
a volume of the compressed air is in a range from 14 to 700 times a volume of the puncture repair liquid in the mixture discharged from the outlet.

### [Present Invention 10]

A puncture repair method for repairing a puncture of an object, including:
a mixing step of generating a mixture of a puncture repair liquid and compressed air;
   and
a discharge step of discharging the mixture into an interior of the punctured object, wherein
in the discharge step, the mixture that is non-aerosolized and non-foamed is discharged from a valve of the object into the interior of the object such that a radiation angle of the mixture is 20 degrees or more.

### [Present Invention 11]

A mixing method of mixing a puncture repair liquid and compressed air, including:
a mixing step of mixing the compressed air supplied from a first inlet and the puncture repair liquid supplied from a second inlet in a mixing chamber, wherein
in the mixing step, the compressed air and the puncture repair liquid are mixed so that a volume of the compressed air is in a range from 14 to 700 times a volume of the puncture repair liquid.

### DESCRIPTION OF THE REFERENCE SIGNS

- 1: puncture repair kit
- 3: compressed air source
- 4: mixing device
- 5: container
- 12: first connector
- 13: second connector

## Claims

1. A puncture repair kit for repairing a puncture of an object, comprising:
a container containing a puncture repair liquid;
a compressed air source for supplying compressed air;
a mixing device attached to the container for generating a mixture of the puncture repair liquid and the compressed air;
a first connector connecting the compressed air source and the mixing device; and
a second connector connecting the mixing device and a valve of the punctured object,
wherein
a radiation angle of the mixture that is non-aerosolized and non-foamed and discharged from the valve into an internal space of the object is 20 degrees or more.

2. The puncture repair kit according to claim 1, wherein the radiation angle is 75 degrees or less.

3. The puncture repair kit according to claim 1, wherein the puncture repair liquid contains at least a rubber solid content and water.

4. The puncture repair kit according to claim 1, wherein the puncture repair liquid has a particle size larger than 100 µm in the mixture that is non-aerosolized.

5. The puncture repair kit according to claim 4, wherein the particle size of the puncture repair liquid is larger than 500 µm.

6. The puncture repair kit according to claim 1, wherein
the container has a mouth portion for containing the puncture repair liquid inside the container, and
the mixing device is attached to the mouth portion.

7. The puncture repair kit according to claim 1, wherein the compressed air source is a compressor.

8. The puncture repair kit according to any one of claims 1 to 7, wherein
the mixing device comprises:
a mixing chamber having a space for mixing the puncture repair liquid and the compressed air;
a first inlet connected to the first connector;
a second inlet communicating with the container; and
an outlet connected to the second connector, wherein
a volume of the compressed air is in a range from 14 to 700 times a volume of the puncture repair liquid in the mixture discharged from the outlet.

9. A mixing device for mixing a puncture repair liquid and compressed air, comprising:
a mixing chamber having a space for mixing the puncture repair liquid and the compressed air;
a first inlet for supplying the compressed air to the mixing chamber;
a second inlet for supplying the puncture repair liquid to the mixing chamber; and
an outlet for discharging a mixture of the puncture repair liquid and the compressed air from the mixing chamber, wherein
a volume of the compressed air is in a range from 14 to 700 times a volume of the puncture repair liquid in the mixture discharged from the outlet.

10. A puncture repair method for repairing a puncture of an object, comprising:
a mixing step of generating a mixture of a puncture repair liquid and compressed air;
and
a discharge step of discharging the mixture into an interior of the punctured object,
wherein
in the discharge step, the mixture that is non-aerosolized and non-foamed is discharged from a valve of the object into the interior of the object such that a radiation angle of the mixture is 20 degrees or more.

11. A mixing method of mixing a puncture repair liquid and compressed air, comprising:
a mixing step of mixing the compressed air supplied from a first inlet and the puncture repair liquid supplied from a second inlet in a mixing chamber, wherein
in the mixing step, the compressed air and the puncture repair liquid are mixed so that a volume of the compressed air is in a range from 14 to 700 times a volume of the puncture repair liquid.
